# EUROPEAN PATENT APPLICATION

(11) **EP 2 474 890 A1**
(43) Date of publication of application: **11.07.2012**
(21) Application number: 10197432.7
(22) Date of filing: 30.12.2010
(51) Int. Cl.: G06F 3/048, H04M 1/725

(54) **Virtual keyboard configuration putting fingers in rest positions on a multitouch screen, calibrating key positions thereof**

(71) Applicant: Touch Software BV, 2691 ZP 's Gravenzande (NL)
(72) Inventor: Vellinga, Geert, 3584 CH, Utrecht (NL)
(74) Representative: Hogeweg, Albertus Johan

(57) **Abstract**

The invention relates to a data processing device (1) comprising:
- detecting means (2) for detecting zones of a surface touched by a user;
- allocating means (3) arranged for:
- identifying which finger touches which of said zones;
- determining a local control panel for each finger touching the surface.
- allocating, for each local control panel, one or more virtual interfaces to parts of said local control panel. By generating local control panels under and around the fingers, the user does not have to stretch her fingers when reaching for a specific interface such as a key of a keyboard. Also wrist movement can be reduced considerably.

## Description

### FIELD OF THE INVENTION

The invention relates to a device and method for processing user input using a surface. It more particularly relates to a processing device creating a virtual interface such as a virtual keyboard.

### BACKGROUND OF THE INVENTION

Publication WO 2004/006080 describes an automatically adaptable virtual keyboard. A computing device recognizes the manual contact with a touch screen and defines a scaled split keyboard customized for the user. The device enables the user to determine the position of the keyboard by putting at least two fingers on the touch screen, resulting in a keyboard defined by the touched zones. By adapting the keyboard to the position, size and orientation of the hands, a physical more healthy posture of the hands and arms can be achieved.

The keys defined in WO 2004/006080 are arranged in the traditional array of keys well known from e.g. the Qwerty keyboard layout. As a result, the user has to stretch her fingers and move her wrist to some extent in order to reach for some of the keys, as is the case in prior art mechanical keyboards using e.g. the Qwerty layout. This stretching and moving may ultimately result in injuries of the arms, hands, neck and shoulders like RSI/CANS.

### OBJECT AND SUMMARY OF THE INVENTION

It is an object of the invention to provide a data processing device which enables the user to input data in an improved and more user-friendly manner without the drawbacks of the prior art mentioned above.

This object is realized by a data processing device comprising:
- detecting means for detecting zones of a surface touched by a user;
- allocating means arranged for:
- identifying which finger touches which of the zones;
- determining a local control panel for each finger touching the surface,;
- allocating, for each local control panel, one or more virtual interfaces to parts of the local control panel.

According to an embodiment of the invention, a virtual keyboard is provided wherein all keys that are possible target keys for a specific finger are positioned under and around that finger in such a way that no wrist movement is required. A user will have to get acquainted with this new type of keyboard layout, but once she is used to it, she will experience an improved comfort and in relation to that, the danger of injuries is significantly decreased.

In an embodiment, the surface is substantially flat. An example of such a flat surface is a flat touch screen surface, or a flat touch pad. On a flat surface, the invention will provide for a key layout with the rest keys getting positioned in a curved setup caused by the differing lengths and joint positions of the fingers. Please note that the invention is not limited to the use of a flat surface. Also a curved surface on any suitable object, such as a steering wheel, could be used to function as a virtual control panel.

In an embodiment, the data processing device determines the size, rotation, position and reach of every single finger and renders a custom virtual keyboard. The keyboard may be dynamically updated to the position of the fingers so that every posture is being permitted. It is virtually impossible to return to the exact same previous posture, which lowers the risk of obtaining RSI/CANS.

In an embodiment, a shape and/or size of the local control panel is finger specific. The different local control panels are 'tailor made' for each specific finger which results in a very ergonomical way of typing.

In a further embodiment, the virtual interfaces are finger specific, which means that different fingers will control different interfaces.

In a further embodiment, the virtual interfaces are positioned within the local control panel in such a way that the user can activate the interfaces with her finger without any wrist movement. This will reduce the risk of injuries.

The virtual interfaces may comprise a key, a jog shuttle, a scrub-bar, and/or a slider.

In a further embodiment, the step of identifying which finger touches which of the zones, comprises:
- counting the number of touched zones;
- searching for at least one group of touched zones that could be produced by the fingers of one human hand;
- if at least one group is found, allocate fingers to the touched zones of the at least one group using knowledge about the anatomy of a human hand.

In a further embodiment, the touch-sensitive member comprises the surface and touch sensors which are arranged to detect the finger touches on the surface. Alternatively, a projected virtual interface can be used, created by means of e.g. a laser beam.

In a further embodiment, the data processing device comprises a display member, wherein the data processing device is arranged to display representations of the interfaces on the display member.

In a further embodiment, the device is arranged to remove the representations from the display member when the surface is not touched for some predetermined time.

In a preferred embodiment, the local control panel interfaces are allocated that are similar to the keys normally typed by the corresponding finger when typing blindly on one of the following types of keyboards:
- Qwerty;
- Germany Qwertz;
- France Azerty;
- Dvorak;
- Japanese keyboard;
- Arabic.

In yet a further embodiment, the shape of the local control panel is determined using the length and orientation of an imaginary line between a zone touched by the index finger and a zone touched by the little finger.

In yet a further embodiment, the device is arranged to display a representation of the one or more virtual interfaces on positions that are shifted in a direction along a main axis of a corresponding finger relative to the touched zone.

The invention also relates to a method of processing user input using a surface, the method comprising:
- detecting zones of a surface touched by a user;
- identifying which finger touches which of the zones;
- determining a local control panel for each finger touching the surface;
- allocating, for each local control panel, one or more virtual interfaces to parts of the local control panel.

Finally, the invention relates to a computer program product enabling a programmable device, when executing the computer program product, to function as the device as described above.

### BRIEF DESCRIPTION OF THE DRAWINGS

The above-mentioned aspects and other aspects of the invention will be further described with reference to the accompanying drawings, wherein:
Fig. 1 schematically shows a part of a processing device according to an embodiment of the invention;
Fig. 2 is a top view of an example of a multi-touch screen comprising a touch-sensitive member on top of a display;
Fig. 3 shows an example of a local control panel defined around the left index finger;
Fig. 4 is a schematic side view of a user typing on a device with a wrist support according to an embodiment of the invention;
Fig. 5, 6 and 7 show side views of further embodiments of the invention;
Fig. 8 schematically shows part of a method performed by a software program when loaded on the processing unit according to an embodiment;
Fig. 9 shows a diagram representing the steps in the procedure Find groups, depicted in Figure 8;
Fig. 10 shows a five finger touches of one hand and three of the corresponding scopes;
Fig. 11 shows a diagram of the procedure Identify Fingers according to an embodiment;
Figures 12A-12H show possible postures of the fingers of one hand in a rest position of the fingers;
Fig. 13 shows a virtual numeric keyboard according to an embodiment;
Fig. 14 schematically shows a top view of a finger touching part of the touch sensitive member and a displaced key representation according to an embodiment.

### DESCRIPTION OF PREFERRED EMBODIMENTS

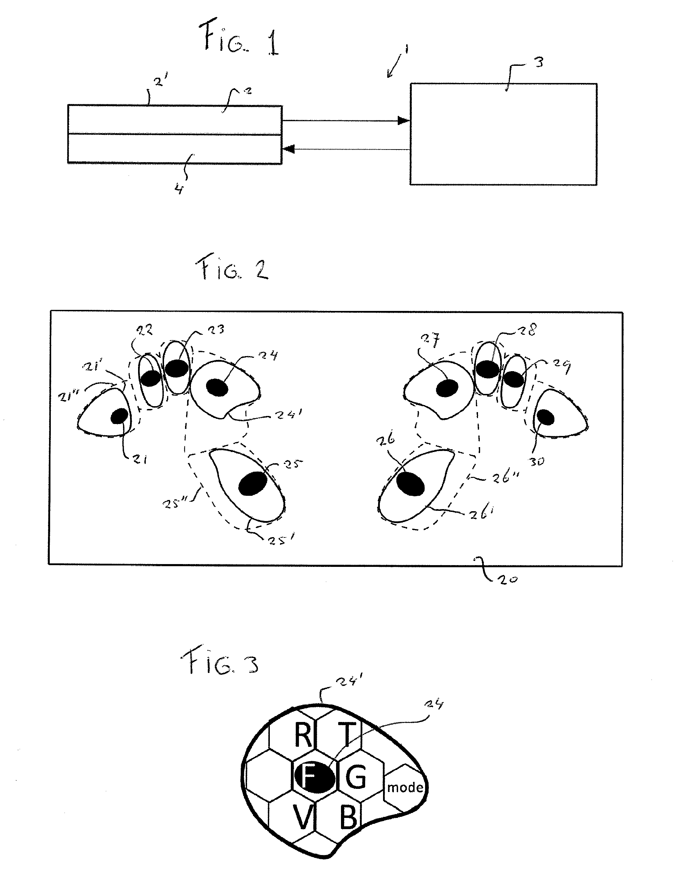

**Figure 1** schematically shows a part of a data processing device 1 according to an embodiment of the invention. The device 1 comprises a touch-sensitive member 2 arranged to detect finger touches on its surface 2'. The device 1 further comprises a processing unit 3 arranged to communicate with the touch-sensitive member 2. In this embodiment a display 4 is provided for displaying an interface layout, such as a keyboard layout, depending on data received from the processing unit 3. Preferably, touch-sensitive member 2 is transparent and is arranged on top of the display 4. An example of such an embodiment is a capacitive multi-touch sensor layer arranged on top of a TFT screen.

According to an embodiment the device 1 comprises key allocating means arranged to identify which finger touches which zone of the surface of the touch-sensitive member 2. The key allocating means may comprise a software program loadable on a processor of the processing unit 3. The software program may be arranged to process input from the touch-sensitive member 2 and to output visual data for the display 4.

**Figure 2** is a top view of an example of a multi-touch screen 20 comprising a touch-sensitive member on top of a display. In the example of Figure 2, a user has put ten fingers on the touch screen 20 resulting in to oval shaped touched zones 21-30 depicted as black ovals in Figure 2. The device 1 comprises allocating means arranged to allocate virtual interfaces to parts of local control panels that are defined around each touched zone 21-30.In this case a virtual keyboard is defined wherein each key has a specific function being the entering of a character such as the 'G' or the deletion of a character, such as the 'backspace'. In an embodiment, the parts of the local control panels defined under the fingers in their initial positions, the so-called 'rest interfaces', will get the functions of the rest positions for blind typing on the middle row of the well known Qwerty keyboard i.e. the characters A, S, D, F, J, K, L and ;. Instead of the Qwerty keyboard, other keyboards may be used such as a Dvorak keyboard or any other known keyboard.

In Figure 2 the initial position (i.e. rest position) of each fingertip is depicted as the black ovals 21-30. These positions can be achieved using all fingers of both hands having no or little finger/hand muscle tension. In Figure 2, the black lines 21'-30' depict the so-called 'safe areas' in which the finger can be maneuvered without the creation of any wrist muscle tension. The dotted lines 21" depict the contact area in which the fingers can be maneuvered resulting in minimal (i.e. very little) wrist muscle tension.

As the keyboard layout changes to the position of both hands, the bigger the size of the surface, the more freedom for the users posture. This freedom of posture will help preventing physical injuries like RSI/CANS. The adapting to the reachable scope of each individual finger helps fighting physical injuries like CTS.

**Figure 3** shows an example of a safe area 24' defined underneath and around the left index finger. As soon as the data processing device 1 has identified which finger is causing the touched zone 24, it will place one or more keys within the safe area 24', resulting in a so-called local virtual control panel. According to an embodiment, the number and specific function/character of the keys placed in the safe area 24' is finger specific. This means that the allocated keys are depending on the identity of the finger. In an embodiment, the processing device 3 comprises a memory in which a set of local control panels are stored which are indexed by an ID representing a finger. The memory may contain the shape and content (e.g. the specific keys) of the local control panels. The processing device 1 may be arranged to adapt the shapes and content over time of the local control panels.

The size of the local control panel and its fields may depend on the dimensions of the hand. In an embodiment, a distance between the zone 24 touched by the index finger and the zone 21 touched by the little finger, is used to size the local control panel of each finger.

The content of the local control panels can change in appearance and function per application context. A local control panel can incorporate all kinds of user interfaces e.g. a jog shuttle, scrub-bar, slider or virtual keys as part of a total virtual keyboard. In case of a virtual keyboard, the different letters are preferably grouped per finger and sized to fit, and represented, within the scope of the safe areas. The shape of the virtual keys can be rectangular, hexagonal or any other suitable shape depending on the configuration.

When all the interfaces, e.g. keys, are within a safe area, the user does not have to reach very far, as normally can be the case when using a keyboard of the prior art.

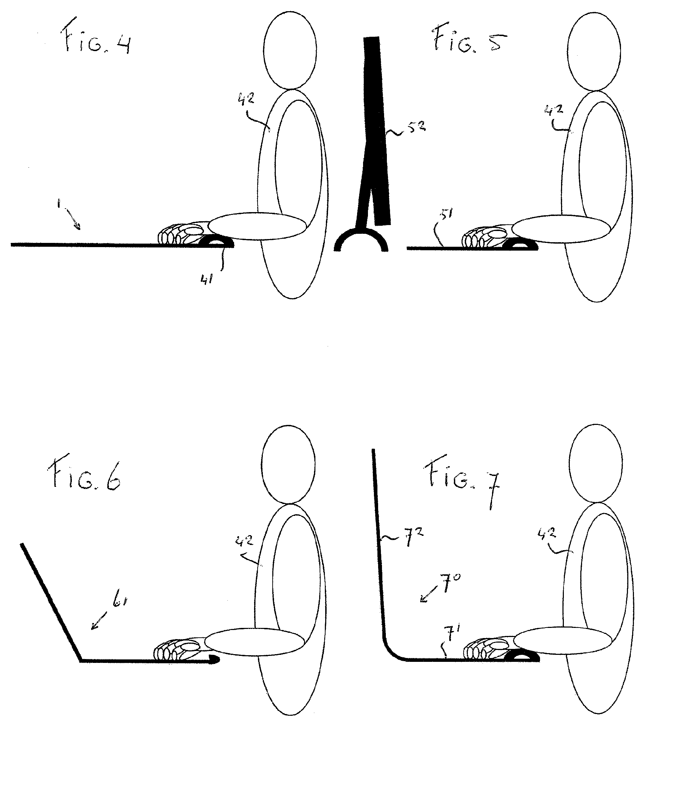

To further decrease wrist muscle tension, the data processing device 1 according to an embodiment comprises a wrist support member 41, see **Figure 4****.** In Figure 4 a side view is shown of a user 42. Preferably the wrist support 42 has a thickness equal to the users wrists offset from the screen, with the fingers maintaining a bent, neutral, tensionless posture, with the underarm and hand in a straight line. Typical values for the thickness are between 1 - 4 cm. **Figure 5, 6 and 7** show side views of further embodiments of the invention with a multi-touch screen 51 used as a keyboard and a separated display 52 in Figure 5 and a laptop 61 comprising a multi-touch screen and a display in Figure 6. Figure 7 shows a side view of a curved multi-touch screen 70 wherein a horizontal part 71 of the screen is mainly used as virtual keyboard and a vertical part 72 is mainly used as display.

In an embodiment, the device 1 is arranged to also incorporate the function of a pointing device. The surface 2' is then used as one large touchpad (to remotely control the pointer/cursor) that is activated by sliding only one finger of a hand. Multiple sliding fingers may invoke gestures like zooming, rotating, navigating content and window control.

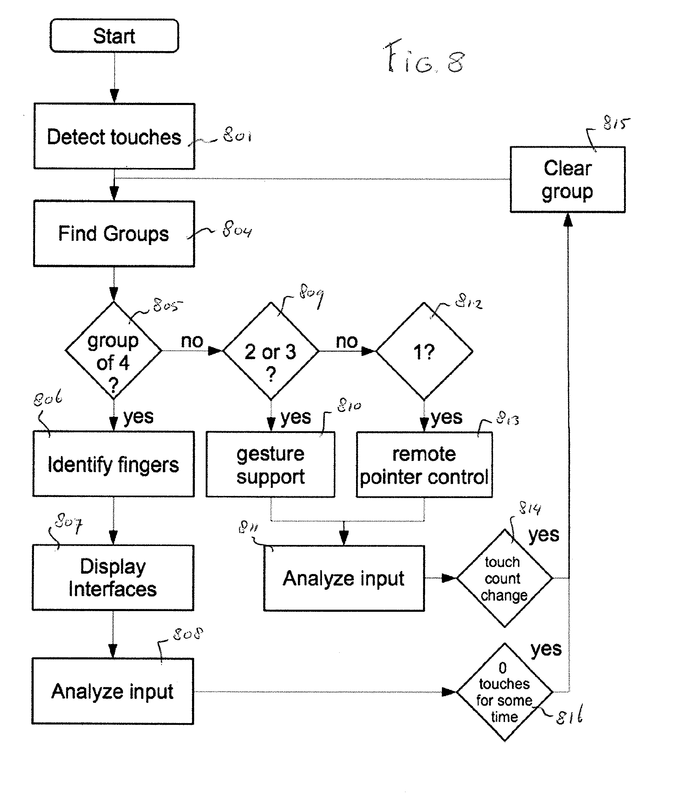

**Figure 8** schematically shows part of the method performed by the data processing device 1 according to an embodiment. Once a finger touch change is detected for some predetermined time, see step 801, the allocation means will search for groups of touched zones that could be produced by the fingers of one human hand, see step 804.

If a group of four finger touches is found, see test 805, the method proceeds to step 806 in which the separate fingers in the groups are identified. Once the fingers are identified, the safe areas 24' are determined for each finger and interfaces are allocated to specific parts of the safe areas 24'. Next, all local control panels are displayed on the screen in step 807 and analyzed for intended user input, see step 808, until the surface 2' is not touched for some time.

If a group of 2 or 3 fingers is found, see test 809, the method proceeds to step 810 in which the group mode is set to gesture recognition. A two-finger gesture could for example be recognized as a sequential zooming, scrolling or rotating command when analyzing the input, see step 811. A three-finger gesture could be recognized as commands for application navigation in step 811. If a group of 1 finger is found, see test 812, the method proceeds to step 813 in which the group mode is set to remote pointer control. The movement of the finger could be remotely controlling a pointer of a possible operating system. If a change in touch count is noticed in gesture or pointer mode, see test 814, the group is removed from the display, see step 815, and in the step 804 new groups are searched for.

After having analyze the input in step 808, it is tested in test 816 whether the surface is touched. If the surface is not touch for some predetermined time, the group is cleared in step 815.

Please note that the invention is not limited to the operation of one type of interface at once. Different groups (i.e. hands) may enter different types of interface modes, so bi-manual input makes e.g. scrolling during pointing or pointing during typing possible.

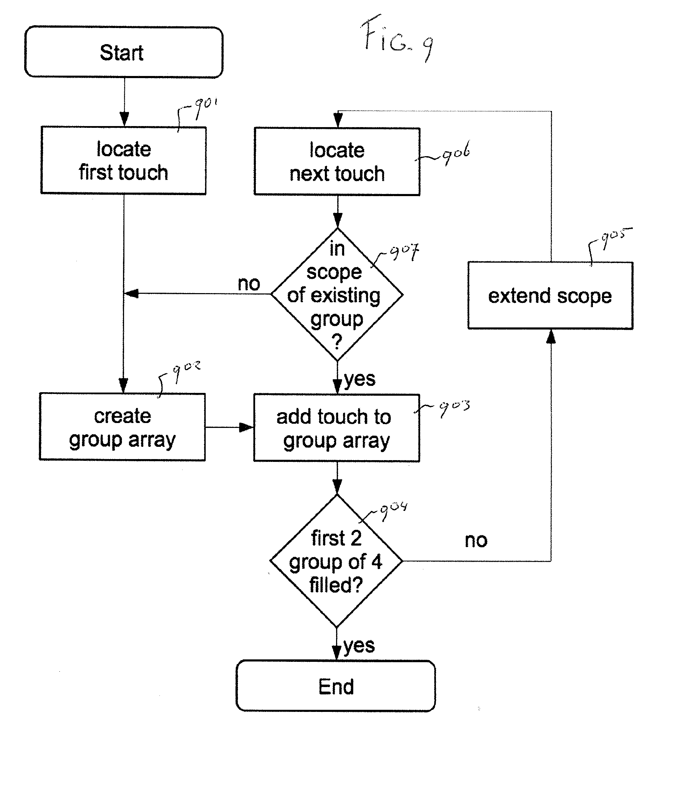

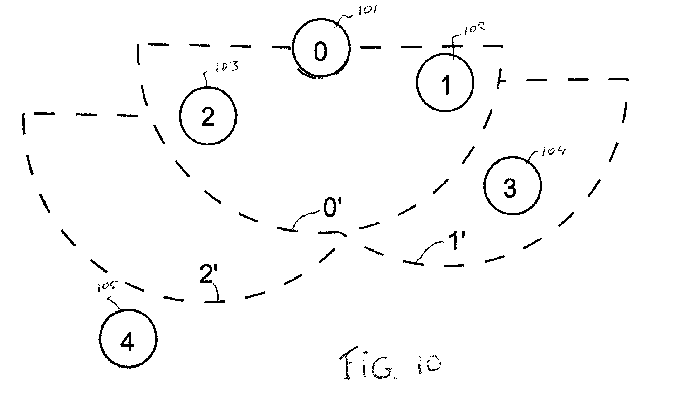

**Figure 9** shows a diagram representing the steps in the procedure Find groups, see step 804 in Figure 8. As soon as at least two fingers are touching the surface, the x and y positions and contact id's and sizes are being passed to the processing unit 3. The software program loaded in the processing unit 3 will fill one or more so-called group arrays, each array having room for five elements. In a step 901, a most upper touch is located. The edge of the touch sensitive member 2 that is the furthest away from the user is considered as the starting point and is given the value y = 0. So the most upper touch will have the lowest y value and is saved as the first element in a first created group array, see steps 902 and 903. Next, it is checked if the first group of four finger positions is filled in step 904. If this is not the case, a 'groups scope' is extended by setting a perimeter for finding a neighbouring fingers that belong to the same hand, see step 905. This step will be described in more detail later with reference to Figure 10. Then a step 906 follows in which a next upper touch is located. If the next located touch is within the scope of an existing group, see test 907, that touch will be added to that specific group in step 903. If however, the next located touch, i.e. contact point, is not within the scope of an existing group, a new group array is created in step 902 and the touch will be added to that new group array in step 903.

**Figure 10** shows five finger touches 101, 102, 103, 104, 105 of a single hand. The first touch 101, with group array element 0, has agroup scope 0'. The second touch 102, has its coordinates within the scope of the group scope 0', so it is added to that group array as element 1. Now the group scope will be extended by scope 1'. This continues until there is no more touch found within the groups extended scope or until the group array is filled with four positions so that the fingers can by identified.

By starting the search for finger touches at the further side of the touch sensitive member 2 the user is allowed to rest her arms and wrists on the surface of the touch sensitive member 2 without confusing the identification process.

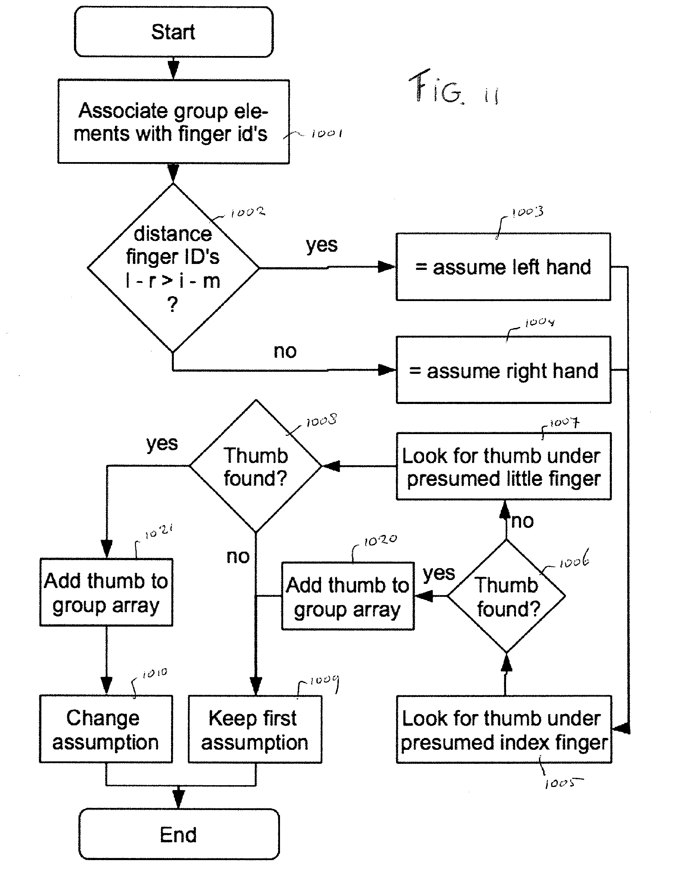

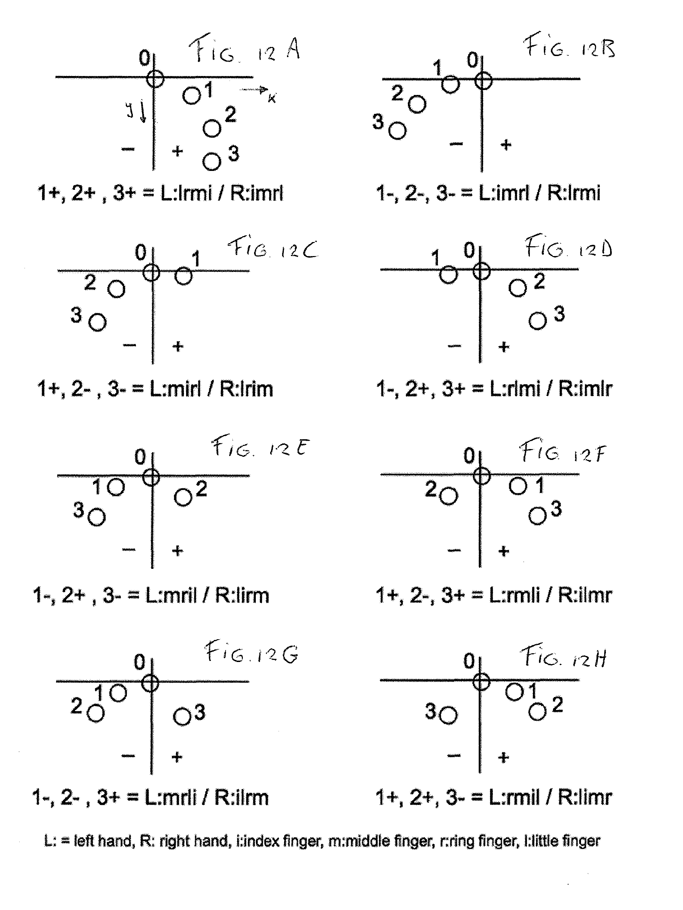

As soon as four finger touches fall within one group scope, the fingers that cause the contact points can be identified. This will be explained with reference to Figure 11 and 12.

**Figure 11** shows a diagram of the procedure Identify Fingers, see also step 806 in Figure 8. The procedure is performed for each group array filled by the method Find Groups shown in Figure 9. In a first step 1001, the group array elements are associated with the finger ID's. This step is discussed in detail with reference to Figure 12.

Because in the rest position of the fingers the distance between the index fingertip and the middle fingertip is smaller then the distance between the little fingertip and the ring fingertip, this difference can advantageously be used to determine which hand is which. This is done in a step 1002. If the distance between the little finger and the ring finger is larger than the distance between the index finger and the middle finger, it is assumed that the fingers belong to the left hand, see step 1003. Otherwise the right hand is assumed, see step 1004. Next, in a step 1005, the allocating means looks for a thumb that is positioned in a scope in a perpendicular cause to an imaginary line between the little and index, with an offset from this line being about seventy percent of the distance between those same fingers. If a thumb is found, see test 1006, it is added tot the group array as element 4, see step 1020. If no thumb is found under the index finger, , a thumb is looked for under the presumed little finger, which in that case is actually the index finger, see step 1007. If a thumb is found, it is added to the group array as element 4. If no thumb is found in step 1007, see test 1008, the first assumption is kept, see step 1009. If however a thumb is found, it is added to the group array in a step 1021 and the assumption of which fingers belong to which hand is changed, see step 1010.

In the method of Figure 11, the fifth fingertip, the thumb, functions as a double check for assigning the left or right hand. Please note that in this embodiment, it is assumed that the wrist is not resting on the screen but on a wrist support. So the wrists will not cause additional touched zones. When wrist contacts do occur, a presumed thumb is found under both the little and index finger the first assumption is also kept.

When considering the finger touches of two hands, (so leaving out the thumbs) there are in fact only 8 possible configurations for the finger settings. These eight possibilities are shown in **Figures 12A-12H****.**

According to an embodiment, the software program advantageously uses the information on these eight possible postures to give a finger id to the group array elements. As the vertical (y-value) order per group has been identified into the group array, Figures 12A-12H reflect the 8 possible postures to extract the finger order in horizontal space (x-value) as well. Please note that at this point it is not determined yet which group array is filled with which hand. Yet the finger order for both cases is being determined. In Figure 12A-12H the first finger is given x=0. Once the axis are determined, the other fingers may have positive or negative x-values. In Figure 12A for example, the finger corresponding to the first element of the group array, G[0], is at the line x = 0. The four other fingers all have positive x=values, indicated by 1 +, 2+, 3+. This configuration can be cause by the Left hand or the Right hand. In case of the left hand, the fingers can be identified as being "I r m i" meaning left, ring, middle, index finger. Figures 12B to 12H depicts other possible configurations. In each Figure, the possible configurations for the left and right hand are shown at the bottom of the drawing.

As was already discussed briefly above, the distance between fingers makes it possible to assign the hand being left or right. When the distance between the first and second element (G[0] and G[1]) are bigger then the third and fourth element (G[2] and G[3]) that makes the first element the little finger in most of all cases.

Once the allocating means of the computing device 1 has information on the location of each individual finger and hand posture, the customized local control panels can be determined and when requested displayed.

In an embodiment, the anatomically reachable safe area without wrist movement is predetermined per finger and is stored in memory. The steps to generate a custom generated safe interface according to an embodiment are as follows. First the position, rotation and scale of the hand group is being determined to determine the right size, place and rotation of the safe area of each finger. Next, the index finger is used as the group's home coordinates. Next, the distance between the index and little finger is being measured to determine the scale per hand. Assuming the two hands have equal sizes, the average scale is being used to scale the safe areas under each finger. An imaginary straight line between the touch coordinates of the index finger and little finger determines the orientation of a hand. Preferably all individual safe areas are given their position by the associated finger id's.

Within these safe areas all kinds of interfaces can be laid out e.g. a jog shuttle, scrub-bar, slider or virtual keys as part of a total virtual keyboard. In case of a virtual keyboard, the different letters are grouped per finger and are sized to fit, and represented, within the scope of the safe areas.

A minimum and maximum scale may be set to reject unrealistic input. Also a maximum difference between lengths of ring and middle finger and little and index finger may be set to encourage the bending of all fingers.

The content of the local control panels may differ per context like different applications. Shortcuts are no longer necessary with the control panels showing custom icons or tools, within or outside the finger scopes.

In an embodiment, there are two types of input extracted from the touched surface as desired user input. The interfaces (e.g. keys) that have fingers resting on it are being treated differently then the other interfaces, also referred to as non-rest interfaces. For every intended activation of a non-rest interface there is a minimal and maximal period of fingertip contact defined. If a non-rest interface is touched for more than the minimal period of time, its character or function is added to the processing devices queue. Since the user is allowed to rest her fingers on the interfaces, without activating the interfaces, another parameter is taken into consideration for these keys; pressure.

In an embodiment, the device 1 comprises a pressure sensor arranged to measure a pressure at different positions on the sensor. The sensor may be arranged on top of the touch-sensitive member. Alternatively the sensor may be arranged between the display and the touch-sensitive member.

Pressure may also be measured by measuring a contact size of a finger tip. In that case no pressure sensor is needed. Finally, other screens are conceivable measuring fingertip distance to a radar device.

Where the pressure on a touched interface deviates from a measured average pressure, the input is then treated as input but only after it is been processed by a timing algorithm to extract desired input. By analyzing this it is possible to separate the resting input from the intended input, to place the intended input to the processing queue to be sent to a processing device.

When all fingers have let go of the surface, the layout may dissolve to encourage the user to approach the surface in another posture then before. The invention will assure the user that the interfaces, i.e. the keys, will more accurately find the fingers then the fingers would find the interfaces. As a result, the user will never have to position her fingers in an unnatural way to touch the virtual keys. When the user is used to the mapping it will be the safest and only way to blind type on a virtual keyboard or equivalent.

In the embodiment of the virtual keyboard, about 45 different characters can be mapped around and under the users fingers, at one time. The keyboard may be dynamically updatable and thus may have the ability to change its character mode from letters to punctuation, shortcuts, capital letters and more, whenever the user needs this change by touching a modifier key like command, alt, shift, control or mode. The modifier keys can be positioned anywhere within the safe areas as e.g. the key 'mode' is depicted in figure 3.

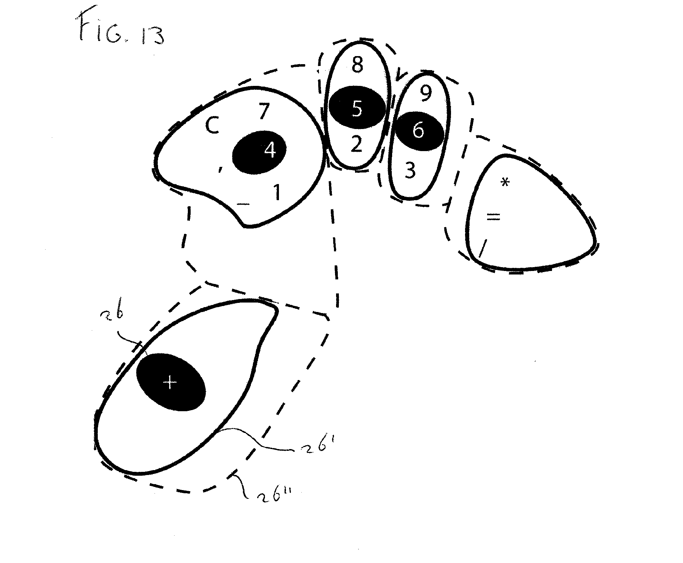

In the embodiments described above, the virtual keyboard will be created by laying down two times five fingers. According to a further embodiment, a numerical layout, shown in **Figure 13** will be created when the user lays down the three inner fingers and the thumb of one hand for some time. The numeric characters are preferably presented within the safe areas depicted by the drawn lines. For a left handed user a mirrored mapping of Figure 13 may be preferred. Please note that in the example of Figure 13 no rest key is defined for the little finger, but still some non-rest keys are presented having functions e.g. times (*), equal to (=) and divided by (/). These keys can be pressed/activated using the little finger.

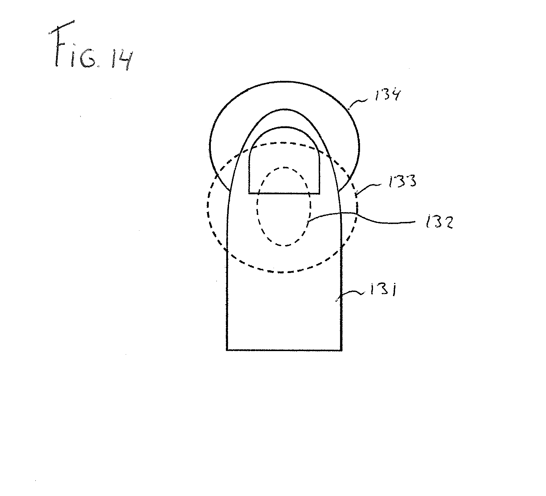

**Figure 14** schematically shows a top view of a finger 131 touching part of the touch sensitive member, see touched zone 132. The key allocation means will define a listening area 133 around the touch zone 132. This listening area 132 resembles a virtual key of the virtual keyboard described above. In this example, the listening area 133 is nearly circular but other shapes are possible as was mentioned above with reference to Figure 3.

According to an embodiment, the data processing device is arranged to display the presentation of the corresponding key, see oval 134, at a slightly different position than the listening area 133. Preferably the key is moved about half the thickness of the finger used in a direction away from the top of the finger along a main axis of the finger. Both the main axis and the thickness of the finger can be determined using the positions of the touched zones within one group (i.e. hand). In the prior art systems the listening area 133 has been corrected in one consistent direction for every different touch. The repositioning mentioned above includes the correction of the interface visualization along the fingers axis. This eliminates the users confusion when fingers are approaching the device from an angle.

It is also conceivable that the non-rest interfaces could be activated by sliding the corresponding finger onto the particular key. In that case, the finger does not leave the surface, but still another key is activated.

In a further embodiment, the data processing device 1 comprises a vibrating member connected to the touch sensitive member or display. The vibration member may be used to generate local sensations so that tactile feedback is given to the user. Alternatively, a shape changing member could be used.

In the embodiments where the keyboard is displayed, the display may only show the layout when the fingers are asking for it by touching the surface. In this way, it will never force the user into a predetermined posture and position. This freedom of posture lowers the risk of obtaining symptoms like RSI/CANS. The layout adapts to the exact placement of the fingertips. Every single user will get a personally adapted layout. The letters will be placed within the safe area so the muscle tension will be minimized. This reduces the risk of obtaining symptoms like CTS as was mentioned before.

Because the entire surface is dynamically updatable, the content on this surface may not just enable blind-typing and touch-typing, it may also feature tools, sliders, jog wheels and more interactions from active applications or it may present part of a gaming experience horizontally to give gaming a whole new dimension.

Please note that the invention is not limited to the presence of a touch-sensitive member but may as well be implemented using a projected keyboard wherein projecting means, such as laser means, are used to project the virtual keyboard onto a surface such as a two dimensional table surface or any three dimensional object having a suitable surface.

It is emphasized that the present invention can be varied in many ways, of which the alternative embodiments as presented are just a few examples. These different embodiments are hence non-limiting examples. The scope of the present invention, however, is only limited by the subsequently following claims.

## Claims

1. A data processing device (1) comprising:
- detecting means (2) for detecting zones of a surface touched by a user;
- allocating means (3) arranged for:
- identifying which finger touches which of said zones;
- determining a local control panel for each finger touching the surface,;
- allocating, for each local control panel, one or more virtual interfaces to parts of said local control panel.

2. Data processing device according to claim 1, wherein a shape and/or size of said local control panel is finger specific.

3. Data processing device according to any of the preceding claims, wherein said one or more virtual interfaces are finger specific.

4. Data processing device according to any of the preceding claims, wherein said one or more virtual interfaces are positioned within said local control panel in such a way that the user can activate said one or more interfaces with her finger without any wrist movement.

5. Data processing device according to any of the preceding claims, wherein said one or more virtual interfaces comprise one or more out of:
- a key;
- a jog shuttle;
- a scrub-bar;
- a slider.

6. Data processing device according to any of the preceding claims, wherein said step of identifying which finger touches which of said zones, comprises:
- counting the number of touched zones;
- searching for at least one group of touched zones that could be produced by the fingers of one human hand;
- if at least one group is found, allocate fingers to the touched zones of said at least one group using knowledge about the anatomy of a human hand.

7. Data processing device according to any of the preceding claims, wherein said device comprises a touch-sensitive member, said touch-sensitive member comprising said surface and touch sensors arranged to detect said finger touches on said surface.

8. Data processing device according to any of the preceding claims, wherein said data processing device (1) comprises a display member (4), said data processing device being arranged to display representations of said interfaces on said display member.

9. Data processing device according to claim 8, said device being arranged to remove said representations from said display member when said surface is not touched for some predetermined time.

10. Data processing device according to any of the preceding claims, wherein in said local control panel interfaces are allocated that are similar to the keys normally typed by said corresponding finger when typing blindly on one of the following types of keyboards:
- Qwerty;
- Germany Qwertz;
- France Azerty;
- Dvorak;
- Japanese keyboard;
- Arabic.

11. Data processing device according to any of the preceding claims, wherein the shape of said local control panel is determined using the length and orientation of an imaginary line between a zone touched by the index finger and a zone touched by the little finger.

12. Data processing device according to any of the preceding claims, wherein said device is arranged to display a representation of said one or more virtual interfaces on positions that are shifted in a direction along a main axis of a corresponding finger relative to the touched zone.

13. A method of processing user input using a surface, said method comprising:
- detecting zones of a surface touched by a user;
- identifying which finger touches which of said zones;
- determining a local control panel for each finger touching the surface;
- allocating, for each local control panel, one or more virtual interfaces to parts of said local control panel.

14. A computer program product enabling a programmable device, when executing said computer program product, to function as the device as defined in claim 1.
